Europäisches Patentamt

European Patent Office

Office européen des brevets

(11) Numéro de publication: **0 426 539 A1**

# (12) DEMANDE DE BREVET EUROPEEN

(21) Numéro de dépôt: 90403021.0

(51) Int. Cl.5: **E04F 17/02, F16L 59/14**

(22) Date de dépôt: 26.10.90

(30) Priorité: 30.10.89 FR 8914228

(43) Date de publication de la demande:
08.05.91 Bulletin 91/19

(84) Etats contractants désignés:
**AT BE CH DE DK ES GB GR IT LI LU NL SE**

(71) Demandeur: **CENTRE D'ETUDES ET DE RECHERCHES DE L'INDUSTRIE DU BETON MANUFACTURE, CERIB**
**B. P. 59**
**F-28232 Epernon(FR)**

(72) Inventeur: **Estoup, Jean-Marie P.**

**4, ruelle du Prieuré**
**F-28230 Epernon(FR)**
Inventeur: **Maillard, Jean-Louis M.**
**107, rue de la République**
**F-28300 Mainvilliers(FR)**
Inventeur: **Monchatre, Francis L.**
**Résidence Chasles, Bâtiment E.**
**F-28230 Epernon(FR)**

(74) Mandataire: **Levesque, Denys et al**
**Cabinet Beau de Loménie 55, rue d'Amsterdam**
**F-75008 Paris(FR)**

(54) **Procédé de fabrication d'un conduit de fumée et conduit de fumée ainsi obtenu.**

(57) Procédé de fabrication d'un conduit de fumée constitué de plusieurs éléments de conduit raccordés entre eux, chaque élément de conduit comprenant une couohe isolante revêtue sur chacune de ses faces d'une couche pleine, consistant à :
enduire un noyau présentant une surface extérieure lisse d'une première couche interne (1) ; contrôler l'épaisseur de ladite couche interne (1) ; juxtaposer des éléments de coque (2) semi-rigides en un matériau isolant autour de ladite couche interne ; assurer un maintien temporaire desdits éléments isolants ;

enduire la surface extérieure des éléments isolants d'une deuxième couche (3) semblable è celle de ladite première couche ; laisser durcir lesdites couches (1 et 3) ; enlever le noyau interne par glissement à l'intérieur de ladite première couche, afin de réaliser un élément, puis raccorder entre eux un nombre donné d'éléments de conduit ainsi formés.

L'invention concerne également le conduit de fumée ainsi fabriqué.

# FIG. 2B

# PROCÉDÉ DE FABRICATION D'UN CONDUIT DE FUMÉE ET CONDUIT DE FUMÉE AINSI OBTENU.

La présente invention a pour objet un procédé de fabrication d'un conduit de fumée constitué de plusieurs éléments de conduit superposés et raccordés entre eux, chaque élément du conduit comprenant une couche isolante revêtue sur chacune de ses faces d'une couche pleine.

Un conduit de fumée de ce type est par exemple décrit par le document DE-OS-3 623 071. Le conduit ainsi décrit est constitué d'une enveloppe externe carrée, par exemple en béton, d'une enveloppe interne circulaire en un matériau céramique et d'un espace intermédiaire renfermant un matériau isolant, de préférence en quatre parties.

Un autre conduit de cheminée est décrit dans la demande de brevet EP-A1-0 066 003. Ce conduit de cheminée est formé d'éléments de conduit dans lesquels la partie isolante est tubulaire, formée de deux demi-coquilles elle entoure un tube interne et est elle-même entourée avec jeu d'un bloc extérieur en pierre ou en béton.

Un autre type de conduit de cheminée est révélé par le brevet FR-2 604 204. Ce conduit comporte deux nappes coaxiales, l'une circulaire l'autre de section carrée, reliées entre elles par des ponts de liaison sous forme de calottes annulaires qui d'une part absorbent les dilatations différentielles des nappes et d'autre part permettent la superposition des différents éléments de conduits (ou boisseaux).

Un problème inhérent à la fabrication des conduits de cheminée réside dans le lissage de la paroi interne du conduit. Ce lissage doit être aussi parfait que possible afin de limiter les pertes de charge et de faciliter l'évacuation des fumées. Le brevet FR-2 445 304 montre un procédé d'obtention d'une composition pour le lissage des parois internes de conduits. Cet enduit spécifique doit en fait être posé après l'application des mortiers traditionnels.

La présente invention a notamment pour objet de fournir un procédé de fabrication d'un conduit de cheminée à faibles pertes de charge, qui facilite l'évacuation des fumées, tout en présentant une bonne isolation thermique, une bonne tenue aux hautes températures, une bonne résistance chimique, ainsi qu'une parfaite étanchéité aux condensats créés par les fumées et une bonne imperméabilité aux gaz.

Ces buts sont atteints grâce à un procédé de fabrication d'un conduit de cheminée du type mentionné au début, qui consiste, conformément à l'invention à :
- enduire un noyau présentant une surface extérieure lisse d'une première couche interne réalisée en un mélange de micromortier à base de ciment alumineux et de fibres de verre,
- contrôler l'épaisseur de ladite couche interne,
- juxtaposer des éléments de coque semi-rigides en un matériau isolant autour de ladite couche interne,
- assurer un maintien temporaire desdits éléments isolants,
- enduire la surface extérieure des éléments isolants d'une deuxième couche semblable à celle de ladite première couche, pour maintenir les éléments isolants,
- laisser durcir lesdites couches, et
- enlever le tube plein interne par glissement à l'intérieur de ladite première couche, afin de réaliser un élément, puis à raccorder entre eux un nombre donné d'éléments de conduits ainsi formés.

Une caractéristique importante de l'invention réside en ce que ladite première couche et ladite seconde couche sont toutes deux réalisées en un même matériau, appliqué de préférence par projection, dont l'épaisseur est facilement contrôlable.

On réalise, de préférence, les éléments isolants en deux demi-coques, en laine de roche ou en béton-mousse.

Selon une caractéristique particulière de l'invention, on raccorde bout à bout deux éléments de conduit en serrant un collier métallique de jointoiement entre deux premières couches mises à nue, puis on rapporte autour de ce collier des coques isolantes que l'on maintient ensemble par des agrafes puis en enduisant leur surface extérieure de la deuxième couche.

Selon une autre caractéristique de l'invention, le raccordement entre deux éléments de conduit peut être réalisé grâce à un embout mâle constitué de la première couche, et à un embout femelle constitué d'un élément de conduit dont une partie de la hauteur présente une section interne élargie.

D'autres modes de raccordement des éléments de conduit sont envisageables sans sortir du cadre de l'invention et ils seront décrits plus en détail dans la description qui va suivre.

Enfin, l'invention concerne un conduit de cheminée réalisé selon le procédé qui vient d'être énoncé.

D'autres caractéristiques et avantages de la présente invention apparaîtront mieux à la lecture de la description qui va suivre, faite en référence aux dessins annexés sur lesquels :
- les figures 1A et 1B représentent, respectivement en coupe transversale et en perspective, un premier mode de réalisation d'un élément de conduit selon l'invention ;
- les figures 2A et 2B représentent de même un second mode de réalisation d'un élément de conduit selon l'invention ;

- la figure 3 est une coupe longitudinale d'un raccord de type mâle-femelle entre deux éléments selon l'invention ;

- les figures 4A et 4B montrent un élément de conduit du type de celui de la figure 3, mais coudé ;

- la figure 5 montre un autre type de raccord entre deux éléments de conduit selon l'invention ;

- les figures 6A à 6C montrent un système de jointoiement par collerette entre deux éléments de conduit selon l'invention ;

- les figures 7A et 7B représentent le raccordement d'un tuyau radial sur un élément de conduit selon l'invention.

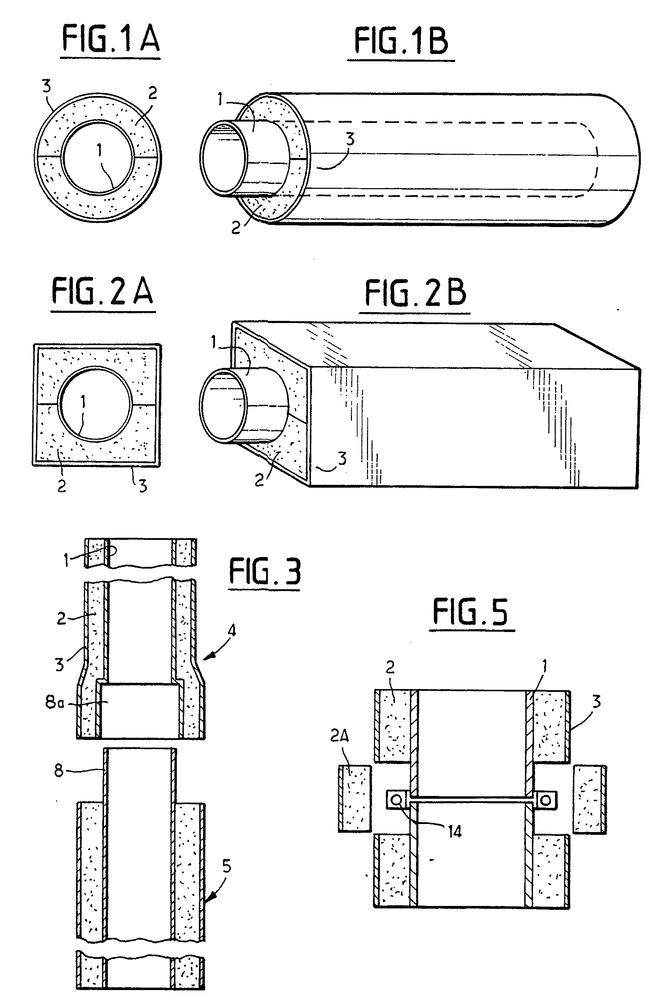

Les figures 1A et 1B montrent respectivement en section droite et en perspective un premier mode de réalisation d'un élément de conduit selon l'invention. L'élément de conduit tel que représenté est constitué d'un tube interne 1 de forme cylindrique, de préférence constitué d'un micromortier à base de ciment et de fibres. Pour obtenir une bonne tenue en température et une bonne résistance chimique, on peut employer par exemple un ciment de type alumineux. Dans ce cas, étant donné la nature non basique du ciment alumineux, des fibres de verre ordinaire peuvent être utilisées.

Ce tube 1 est entouré de deux demi-coques 2 de laine de roche semi-rigide ou de tout autre isolant semi-rigide ou rigide, tel par exemple qu'un béton-mousse.

La paroi externe 3 est constituée d'une autre couche de micromortier à base de fibres de verre ou d'un autre élément. La section de la paroi externe 3 peut être cylindrique comme le montrent les figures 1A et 1B, mais elle peut également être carrée comme il apparaît sur les figures 2A et 2B qui ne diffèrent des figures 1A et 1B que par la forme de la couche externe 3 et en conséquence celle de l'isolant 2.

Sans sortir du cadre de l'invention, la couche externe 3 pourrait présenter une section rectangulaire ou toute autre forme géométrique adaptée aux besoins.

La forme générale du conduit peut être droite ou courbe.

Il va maintenant être décrit un procédé de fabrication d'un tel type de conduit.

La première étape consiste à enduire, par projection d'un mélange de micromortier en ciment alumineux et de fibres de verre, un noyau, cylindrique de préférence, en un matériau présentant un état de surface lisse. On peut à cet effet utiliser un tube en PVC ou en acier... ou en un autre matériau rigide, pourvu qu'il présente une surface extérieure particulièrement lisse. La méthode par projection, manuelle ou automatique, permet de contrôler l'épaisseur de la paroi 1 ainsi formée. La première couche peut également être réalisée en coulant un prémix.

La seconde étape consiste à placer des portions de coque 2 semi-rigides isolantes autour de la paroi interne 1.

Selon un mode de réalisation préféré, on place des demi-coques 2, en laine de roche autour de la paroi interne.

La forme extérieure des coques 2 peut être cylindrique comme montré sur les figures 1A et 1B, mais elle peut aussi être parallélépipédique (voir figures 2A et 2B). Dans tous les cas, le maintien temporaire des portions de coque est assuré par des agrafes en U (non représentées).

La troisième étape est une projection d'un mélange de micromortier et de fibres de verre sur les portions de coque isolantes ainsi placées. Cette étape permet de réaliser une couche extérieure 3 destinée à maintenir les portions de coque 2, et de donner un aspect extérieur "fini" à l'élément de conduit. Bien entendu cette seconde projection, manuelle ou automatique, permet de contrôler l'épaisseur de la couche projetée.

L'étape suivante consiste en un démoulage du noyau intérieur, après durcissement des couches projetées, c'est-à-dire entre 4 et 6 h après la projection. Le démoulage se fait par glissement du noyau intérieur.

On obtient ainsi un élément de conduit, que l'on peut emboîter de différentes façons à d'autres éléments de conduits ou boisseaux, comme il va être expliqué ci-après.

Afin d'illustrer ce qui vient d'être énoncé, il sera donné à titre d'exemple non limitatif les caractéristiques d'un boisseau cylindrique (figure 1) :
hauteur : 1 m
diamètre intérieur : 0,25 m
épaisseur paroi interne : 4,5 mm
épaisseur paroi externe : 4,5 mm
épaisseur coque isolante : 40 mm
poids : 21 kg

Les boisseaux ainsi obtenus sont facilement tronçonnables ; de plus ils permettent une bonne isolation thermique grâce à l'épaisseur de la coque isolante, qui est égale à 40 mm soit environ 10 fois supérieure à l'épaisseur de chacune des parois. L'étanchéité est assurée par le micromortier, paroi interne 1 et/ou paroi externe 3, très dense de préférence. L'utilisation d'un ciment réfractaire de type alumineux enrobant des fibres de verre permet une bonne tenue aux hautes températures ainsi qu'une durabilité maximale des fibres de verre. De plus, le fait d'utiliser un tel mélange procure une parfaite résistance chimique au boisseau, car le ciment alumineux ne libère pas de chaux tandis que l'armature en fibres de verre est insensible aux condensats acides.

Un autre avantage du boisseau qui vient d'être décrit réside dans son faible poids, ce qui permet d'envisager la fabrication d'éléments unitaires d'une hauteur d'étage, soit environ 2,50 m.

La réalisation d'un conduit de cheminée selon l'invention nécessite donc de raccorder bout à bout un nombre donné de boisseaux tels que définis plus haut. Le raccord peut soit être prévu dès la fabrication du boisseau, soit être réalisé en modifiant un boisseau standard déjà fabriqué.

Dans le premier cas, il peut être envisagé, comme représenté sur la figure 3, un emboîtement de type mâle-femelle dans lequel la partie femelle 4 est réalisée en augmentant sur une longueur donnée 8a le diamètre de l'une des extrémités du noyau de fabrication. Avantageusement, le diamètre extérieur du noyau sera sensiblement égal au diamètre extérieur standard augmenté de deux fois l'épaisseur de la paroi interne 1.

La partie mâle 5 associée est constituée d'un boisseau sur une partie 8 de la hauteur duquel la coque isolante 2 et la couche externe 3 ont été enlevées afin de découvrir uniquement la couche interne 1, pour permettre l'emboîtement dans la partie 8a.

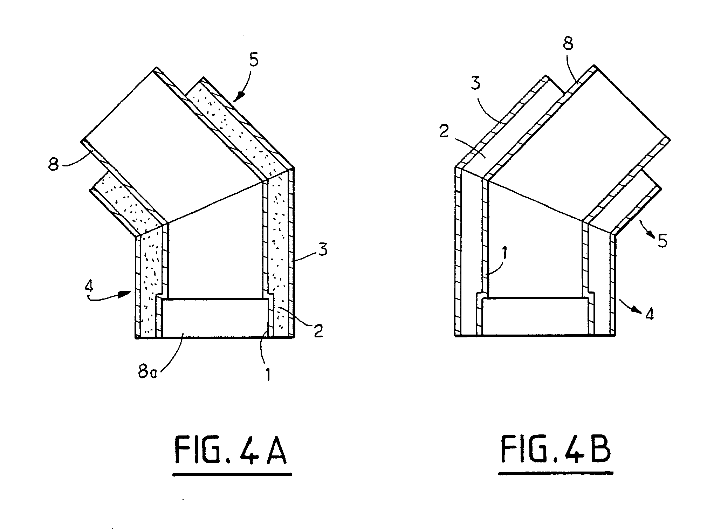

Les figures 4A et 4B représentent un élément de conduit présentant un emboîtement de type mâle-femelle, mais coudé en sa partie centrale. Une autre différence réside en ce que chaque élément de conduit comporte une partie mâle 5 et une partie femelle 4.

Bien entendu, une partie mâle 5 et une partie femelle 4 peuvent également être présentes sur un boisseau droit.

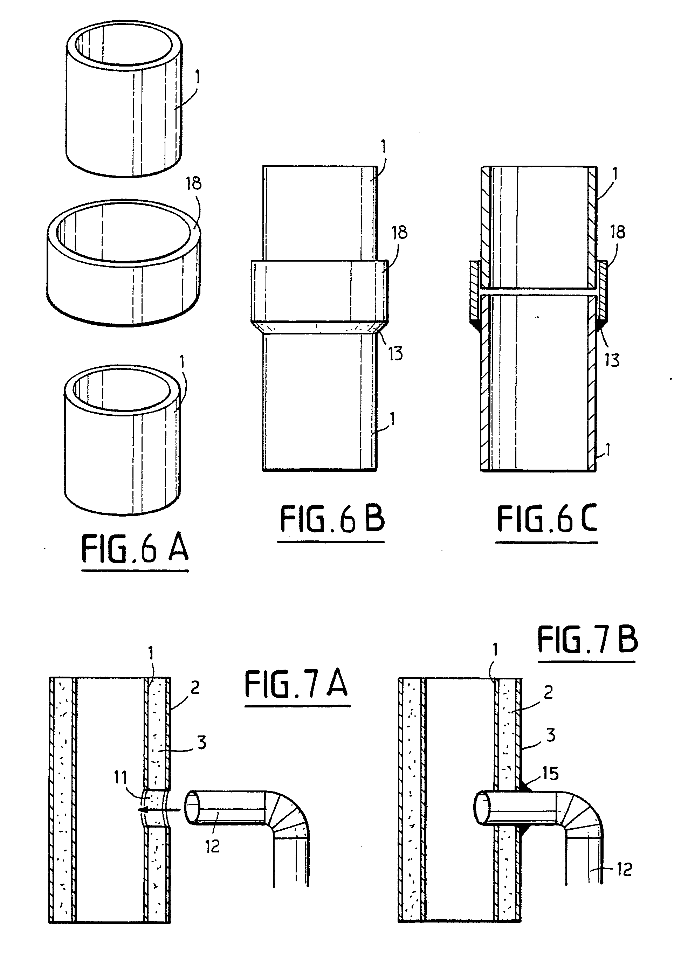

Un autre mode de montage selon l'invention est représenté par la figure 5. Le principe de ce montage consiste à relier deux couches internes 1 mises à nu grâce à un collier métallique 14 de jointoiement que l'on serre donc au niveau du raccordement des deux couches internes 1. Une coque isolante 2A, par exemple formée de deux demi-coques, de hauteur réduite est ensuite rapportée autour du collier 14; puis une couche externe telle que définie ci-avant peut être projetée sur la zone de raccordement, comme sur les autres zones du conduit selon l'invention.

Il est encore envisageable, comme représenté sur les figures 6A à 6C, de raccorder deux éléments de conduit en entourant, au niveau de la zone de raccordement, les couches internes 1 de chacun des éléments de conduit à raccorder, d'une collerette 18 par exemple en béton préfabriqué, collerette qui est tenue par un joint de pose 13 d'étanchéité. Une coque isolante peut alors venir entourer la zone de raccordement, puis une couche externe peut être projetée sur la surface extérieure de la coque 2 isolante.

Enfin, un aspect tout à fait avantageux de l'invention réside dans la possibilité de piquage radial de tout tuyau, par exemple d'un tuyau de raccordement à la chaudière, comme il apparaît sur les figures 7A et 7B. De préférence, un boisseau spécifique est préfabriqué comme suit : un orifice de raccordement 11 est obtenu par perçage radial à travers toute l'épaisseur d'un boisseau standard, puis un élément de raccordement 12 est introduit dans l'orifice 11 ainsi obtenu, avant qu'un joint d'étanchéité 15 soit appliqué sur la zone de raccordement, à l'extérieur du boisseau.

Le procédé de fabrication de conduits de cheminée selon l'invention est facile à mettre en oeuvre, et présente les nombreux avantages qui ont été énoncés ci-avant, en particulier au niveau du lissage de la couche intérieure, et des résistances chimique et thermique améliorées.

Bien entendu, diverses modifications et adjonctions peuvent être apportées par l'homme de l'art au procédé et au dispositif qui viennent d'être décrits sans sortir du cadre de l'invention.

**Revendications**

1. Procédé de fabrication d'un conduit de fumée constitué de plusieurs éléments de conduit raccordés entre eux, chaque élément de conduit comprenant une couche isolante revêtue sur chacune de ses faces d'une couche pleine, caractérisé en ce qu'il consiste à :
- enduire un noyau présentant une surface extérieure lisse d'une première couche interne (1) réalisée en un mélange de micromortier à base de ciment alumineux et de fibres de verre,
- contrôler l'épaisseur de ladite couche interne (1),
- juxtaposer des éléments de coque (2) semi-rigides en un matériau isolant autour de ladite couche interne,
- assurer un maintien temporaire desdits éléments isolants,
- enduire la surface extérieure des éléments isolants d'une deuxième couche (3) semblable à celle de ladite première couche, pour maintenir les éléments isolants,
- laisser durcir lesdites couches (1 et 3),
- enlever le noyau interne par glissement à l'intérieur de ladite première couche, afin de réaliser un élément, puis raccorder entre eux un nombre donné d'éléments de conduit ainsi formés.

2. Procédé de fabrication selon la revendication 1, caractérisé en ce qu'on réalise les éléments isolants (2) en laine de roche.

3. Procédé de fabrication selon la revendication 1, caractérisé en ce qu'on réalise les éléments isolants en béton-mousse.

4. Procédé de fabrication selon l'une quelconque des revendications précédentes, caractérisé en ce qu'on réalise les éléments isolants (2) en forme de deux demi-coques.

5. Procédé selon l'une quelconque des revendications précédentes, caractérisé en ce que l'enduction est réalisée par projection ou en coulant un prémix.

6. Procédé selon l'une quelconque des revendications précédentes, caractérisé en ce qu'on effectue un perçage radial (11) dans toute l'épaisseur de l'élément de conduit après l'étape d'enlèvement du noyau, afin de raccorder un élément de dérivation (12), puis on pose un joint d'étanchéité (15) sur la partie extérieure de l'élément de dérivation (12), dans la zone de raccordement.

7. Procédé selon l'une quelconque des revendications 1 à 6, caractérisé en ce qu'on réalise le raccordement de deux éléments de conduit (4, 5) en aménageant leurs extrémités respectives afin d'y faire apparaître d'une part un embout mâle (5) formé de ladite première couche (1) uniquement, et d'autre part un embout femelle (4) constitué d'un élément de conduit de section interne élargie sur une partie (8a) de sa hauteur, le diamètre intérieur de l'embout femelle étant sensiblement égal au diamètre extérieur de l'embout mâle.

8. Procédé selon l'une quelconque des revendications 1 à 6, caractérisé en ce qu'on réalise le raccordement bout à bout de deux éléments de conduit en serrant un collier métallique de jointoiement (14) entre deux premières couches internes (1) mises à nu d'un élément de conduit, puis on rapporte autour desdites couches internes (1) des éléments isolants (2A) que l'on maintient en projetant sur la surface extérieure desdits éléments isolants (2A) ladite deuxième couche (3).

9. Procédé selon l'une quelconque des revendications 1 à 6, caractérisé en ce qu'on réalise le raccordement bout à bout de deux éléments de conduit en plaçant au niveau de leurs extrémités une collerette cylindrique (18) que l'on fixe par au moins un joint d'étanchéité circonférentiel (13).

10. Conduit de fumée constitué de plusieurs éléments de conduit raccordés entre eux, chaque élément de conduit comprenant une couche interne (1) entourée d'une couche isolante (2) en plusieurs parties, elle-même entourée d'une couche externe (3), caractérisé en ce que la couche interne (1) et la couche externe (3) sont réalisées en un même matériau dont l'épaisseur est contrôlée, et en ce que la couche isolante (2) est constituée d'une pluralité de coques semi-rigides juxtaposées.

11. Conduit de fumée selon la revendication 10, caractérisé en ce que le matériau constitutif des couches interne (1) et externe (3) est un mélange de micromortier et de fibres de verre.

12. Conduit de fumée selon la revendication 11, caractérisé en ce que ledit micromortier est constitué d'un ciment de type alumineux.

13. Conduit de fumée selon l'une quelconque des revendications 10 à 12, caractérisé en ce que le matériau constitutif des coques isolantes (2) est une laine de roche.

14. Conduit de fumée selon l'une quelconque des revendications 10 à 12, caractérisé en ce que le matériau constitutif des coques isolantes (2) est du béton-mousse.

15. Conduit de fumée selon l'une quelconque des revendications 10 à 14, caractérisé en ce que le raccord entre éléments de conduit consiste en un embout mâle (5) formé d'une couche interne (1), et en un embout femelle (4) constitué d'un élément de conduit de section élargie (8a) sur une partie de sa hauteur, le diamètre intérieur de l'embout femelle étant sensiblement égal au diamètre extérieur de l'embout mâle.

16. Conduit de fumée selon l'une quelconque des revendications 10 à 14, caractérisé en ce que chaque élément de conduit comporte un embout mâle (5), et un embout femelle (4).

# FIG.1A

# FIG.1B

# FIG.2A

# FIG.2B

# FIG.3

# FIG.5

FIG. 4 A

FIG. 4 B

**FIG.6 A**

**FIG.6 B**

**FIG.6 C**

**FIG.7 B**

**FIG.7 A**

8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-U-8 532 455   (ZEIDLER)<br>* page 2, lignes 13 - 27 ** page 3, ligne 28 - page 4, ligne 4; figures 1, 2 * | 1,2,5,10,11,13 | E 04 F 17/02<br>F 16 L 59/14 |
| | — — — | | |
| A | GB-A-1 419 810   (PARK SECTIONAL INSULATING COMPANY LIMITED)<br>* page 1, ligne 79 - page 3, ligne 28; figures 1, 2, 3 * | 1,2,5,9,10,13,15 | |
| | — — — | | |
| A | DE-A-2 754 478   (GEORG BUCHER GMBH)<br>* page 8, ligne 17 - page 11, ligne 16; figures 1, 2, 3 * | 1,5,10 | |
| | — — — | | |
| A | GB-A-2 127 007   (TRUE-CRETE LIMITED)<br>* page 1, lignes 3 - 111; figures 1, 2, 3 * | 1,12 | |
| | — — — | | |
| D,A | EP-A-0 066 003   (SCHREYER,GEB.HAASE)<br>* page 5, ligne 11 - page 8, ligne 24; figure 1 * | 1,2,4,10,13 | |
| | — — — | | |
| A | DE-B-1 299 400   (RAWITZER)<br>* colonne 3, lignes 16 - 57 ** colonne 4, lignes 14 - 62; figures 1-6 * | 1,3,10,14 | |
| | — — — | | DOMAINES TECHNIQUES RECHERCHES (Int. Cl.5) |
| A | FR-A-1 443 047   (N.V.HANDEL IN BOUWVAKMATERIALEN DE-HOUT-EN-STEEN-WERF AFD:DE STEENWERF)<br>* page 2, colonne de gauche, ligne 38 - page 3, colonne de gauche, ligne 59; figures 1-4 * | 1,5,6,9,10 | E 04 F<br>F 16 L<br>F 23 J<br>F 27 D |
| | — — — | | |
| A | CH-A-4 948 76   (NOTZ)<br>* colonne 2, ligne 13 - colonne 3, ligne 28; figures 1-4 * | 1,6,9 | |
| | — — — | | |
| A | FR-A-2 015 581   (PLEWA-WERKE G.M.B.H.)<br>* page 2, ligne 32 - page 4, ligne 8; figures 1-4 * | 1,6 | |
| | — — — | | |
| | −/− | | |

Le présent rapport de recherche a été établi pour toutes les revendications

| Lieu de la recherche | Date d'achèvement de la recherche | Examinateur |
|---|---|---|
| La Haye | 11 janvier 91 | AYITER J. |

**Office européen
des brevets**

# RAPPORT DE RECHERCHE
## EUROPEENNE

Numéro de la demande

**EP 90 40 3021**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (int. CI.5) |
|---|---|---|---|
| A | GB-A-9 995 12  (KINSON POTTERY LIMITED)<br>* page 1, lignes 49 - 71; figures 1-4 *<br>— — — — — | 1,7,9,10,<br>15 | |

**DOMAINES TECHNIQUES
RECHERCHES (Int. CI.5)**

Le présent rapport de recherche a été établi pour toutes les revendications

| Lieu de la recherche | Date d'achèvement de la recherche | Examinateur |
|---|---|---|
| La Haye | 11 janvier 91 | AYITER J. |

CATEGORIE DES DOCUMENTS CITES
X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons
........................................................................
& : membre de la même famille, document
    correspondant